# NEUE EUROPÄISCHE PATENTSCHRIFT

(11) **EP 2 814 703 B2**
(45) Veröffentlichungstag und Bekanntmachung des Hinweises auf die Entscheidung über den Einspruch: **10.05.2023**
(45) Hinweis auf die Patenterteilung: 25.05.2016
(21) Anmeldenummer: 13703829.5
(22) Anmeldetag: 14.02.2013
(51) Int. Cl.: B60T 7/12, B60T 8/32, B60T 8/88, B60T 13/66, B60T 13/68, B60T 7/04, B60T 8/36

(54) **VERFAHREN ZUR BESTIMMUNG EINES BREMSDRUCKWERTS ANHAND VON KENNLINIEN**
METHOD FOR DETERMINING A BRAKE PRESSURE VALUE ON THE BASIS OF CHARACTERISTIC CURVES
PROCÉDÉ DE DÉTERMINATION D'UNE VALEUR DE PRESSION DE FREINAGE À L'AIDE DE COURBES CARACTÉRISTIQUES

(30) Priorität: 16.02.2012 DE 102012003106
(43) Veröffentlichungstag der Anmeldung: 24.12.2014
(73) Patentinhaber: KNORR-BREMSE Systeme für Nutzfahrzeuge GmbH, 80809 München (DE)
(72) Erfinder: SCHREITER, Markus, 74831 Gundelsheim (DE)
(74) Vertreter: LifeTech IP Spies & Behrndt Patentanwälte PartG mbB
(86) Internationale Anmeldenummer: PCT/EP2013/052926
(87) Internationale Veröffentlichungsnummer: WO 2013/120928

(56) Entgegenhaltungen:
- EP-A1- 0 241 673
- EP-A1- 0 447 750
- EP-A2- 1 000 830
- EP-B1- 0 373 315
- EP-B1- 0 399 162
- EP-B1- 0 949 130
- EP-B1- 1 069 015
- EP-B1- 1 275 570
- EP-B1- 1 404 557
- EP-B1- 2 040 961
- WO-A1-95/16594
- DE-A1- 3 829 951
- DE-A1- 10 050 466
- DE-A1- 19 653 264
- DE-A1- 19 852 399
- DE-A1- 19 931 865
- DE-A1-102006 029 349
- DE-A1-102006 029 349
- DE-A1-102007 018 515
- DE-A1-102008 022 026
- DE-A1-102008 029 311
- DE-A1-102008 029 311
- DE-A1-102009 005 472
- DE-B4- 19 501 286
- DE-B4- 19 504 411
- DE-B4- 19 707 207
- DE-C1- 19 620 540
- US-A1- 2005 131 613
- US-A1- 2005 173 980
- RALF LEITER et al.: Bremsanlagen, 2004, pages 219-233,
- "Das Anti-Blockier-System (ABS) und die Antriebs-Schlupf-Regelung (ASR)", WABCO, 2011,

## Beschreibung

Die Erfindung betrifft ein Verfahren zur Bestimmung des Bremsdruckwerts des von einem pneumatischen Kanal eines weiterhin wenigstens einen elektrischen Kanal aufweisenden Bremswertgebers ausgesteuerten Bremsdrucks in einer Bremsanlage eines Kraftfahrzeugs ohne Verwendung eines Bremsdrucksensors, wobei durch wenigstens einen, dem elektrischen Kanal zugeordneten elektrischen Sensor abhängig von Betätigungen des Bremswertgebers gewünschte Bremsdruckwerte repräsentierende elektrische Signale erzeugt werden, gemäß dem Oberbegriff von Anspruch 1, sowie eine Bremseinrichtung eines Fahrzeugs gemäß dem Anspruch 9.

Aus der DE 198 52 399 A1 ist ein über ein Fußbremspedal betätigbarer Bremswertgeber für ein elektronisches Bremssystem bekannt, welcher betätigungsabhängig in einem pneumatischen Kanal einen pneumatischen Bremsdruck und in einem elektrischen Kanal über einen elektrischen Sensor ein elektrisches Bremsanforderungssignal erzeugt. Bei einem Ausfall der Elektrik oder Elektronik wird der vom Bremswertgeber im pneumatischen Kanal erzeugte pneumatische Bremsdruck als Bremsdruck wirksam.

Wie in DE 10 2006 029 349 A1 beschrieben, enthält die Regelung eines Bremssystems mit ABS-Funktionalität einen Raddruckregler, welcher von einer übergeordneten Funktion gesteuert wird, welche die Druckanforderungen errechnet. Der Raddruckregler stellt dann den gewünschten Raddruck ein. Die Regelgüte einer ABS-Regelung hängt dabei wesentlich von der Regelgenauigkeit des Raddruckreglers ab. Werden die Druckanforderungen ungenau ausgeführt, kann die ABS-Regelung das betreffende Rad nicht im optimalen Schlupfbereich halten. Folge hiervon sind Einbußen an Bremsleistung bzw. Stabilität beim Bremsen. Eine optimale Bremsschlupfregelung lässt sich erzielen, wenn in jedem Radbremskreis ein eigener Drucksensor vorhanden ist. Im Hinblick auf eine kostengünstige Fertigung des Bremsregelsystems sind jedoch oftmals keine Raddrucksensoren vorhanden, so dass der für die Regelung notwendige aktuelle Raddruck über ein Raddruckmodell bestimmt werden muss. Zur Bestimmung des Raddrucks über das Raddruckmodell wird jedoch zumindest eine Information über den anliegenden Vordruck benötigt, um aus Ansteuerzeiten der Einlass- und Auslassventile auf den aktuellen Raddruck schließen zu können. Der Raddruckregler, in dem das Raddruckmodell verwirklicht ist, verwendet folglich den mit einem Vordruck-Sensor am Bremswertgeber gemessenen Vordruck als Ausgangswert für die Bestimmung des aktuellen Raddrucks.

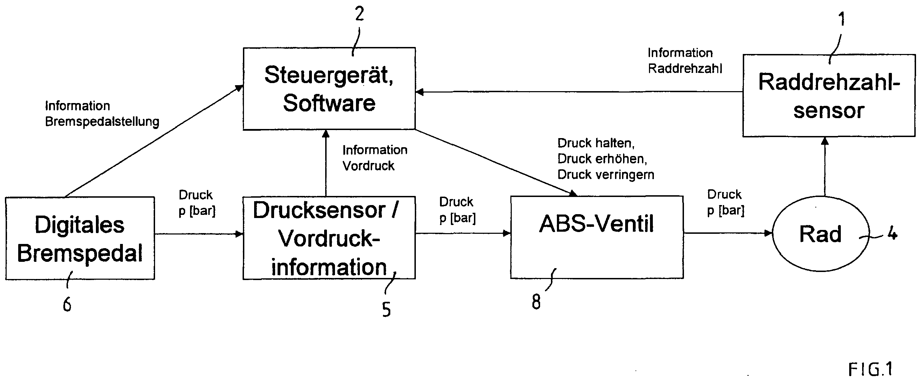

In Fig.1 ist eine ABS-Regelung für pneumatische oder elektro-pneumatische Bremsanlagen des Stands der Technik gezeigt, bei welcher bei einer durch Betätigung eines Bremswertgebers 6 initiierten Bremsung die von Raddrehzahlsensoren 1 gelieferten Raddrehzahlsignale in einem Steuergerät 2 ausgewertet und der jeweilige Bremsschlupf der mit Radbremszylindern 4 versehenen Räder berechnet wird. Dann regelt die in dem Steuergerät 2 implementierte ABS-Regelung über ABS-Ventile 8 die Bremsschlüpfe der Räder über ABS-Steuerventile 8 auf einen optimalen Schlupfregelbereich ein, um einen möglichst kurzen Bremsweg und ein stabiles Fahrzeugverhalten zu erzielen. Aufgrund des begrenzten Vorratsdrucks in den Vorratsbehältern und der insbesondere bei Nutzfahrzeugen relativ langen Pneumatik-Verrohrung ist eine solche ABS-Regelung ohne Information über den Vordruck am ABS-Steuerventil 8 zwar möglich, jedoch wird bei einem Verzicht auf die Vordruck-Information die ABS-Regelung ungenau, der Bremsweg verlängert sich und die ABS-Regelung wird unkomfortabel. Komfortabler und genauer ist die ABS-Regelung demgegenüber, wenn im ABS-System eine Information über den Vordruck vorhanden ist, wie sie mit Hilfe eines dem ABS-Steuerventil 8 vorgeordneten Vordruck-Sensor 5 ermittelt werden kann. Dieser Vordruck-Sensor 5 misst den Vordruck in einer Zuleitung des ABS-Steuerventils 8, welches an den Bremszylinder des zugeordneten Rads 4 dann einen bremsschlupfoptimierten Bremsdruck aussteuert. Anhand der bekannten Charakteristik des ABS-Steuerventils 8 und der vom Vordruck-Sensor 5 gelieferten Information über den Vordruck lassen sich die Ansteuerzeiten der ABS-Ventile 8 berechnen, um den jeweiligen Zieldruck am bremsschlupfgeregelten Rad 4 zu erhalten. Unter einem Vordruck-Sensor 5 wird daher ein Drucksensor verstanden, welcher den stromaufwärts eines ABS-Steuerventils 8 vorhandenen Bremsdruck misst und deshalb dem ABS-Steuerventil vorgeschaltet ist.

Solche ABS-Vordruck-Sensoren sind jedoch mit gewissen Kosten verbunden. Außerdem bewirkt ein Ausfall von Vordruck-Sensoren bzw. von deren Auswerteeinheit zugleich einen Ausfall der ABS-Regelung mittels der ABS-Steuerventile.

Weiterhin kann bei einem elektronisch geregelten Bremseinrichtung (EBS) bei fehlerbedingt abgeschalteten Druckregelmoduln (DRM) die ABS-Regelung mittels der den Druckregelmoduln nachgeschalteten ABS-Ventile nicht mehr stattfinden, da dann die in den Druckregelmoduln integrierten Drucksensoren keine Informationen mehr über den ABS-Vordruck liefern können.

DE 10 2008 029 311 A1 offenbart ein Verfahren zur Bestimmung des Bremsdruckwerts des von einem pneumatischen Kanal eines weiterhin wenigstens einen elektrischen Kanal aufweisenden Bremswertgebers ausgesteuerten Bremsdrucks in einer Bremseinrichtung eines Kraftfahrzeugs ohne Verwendung eines Bremsdrucksensors, wobei durch wenigstens einen, dem elektrischen Kanal zugeordneten elektrischen Sensor abhängig von Betätigungen des Bremswertgebers gewünschte Bremsdruckwerte repräsentierende elektrische Signale erzeugt werden, bei dem eine erste Kennlinie ermittelt und gespeichert wird, in welcher die Abhängigkeit der von dem wenigstens einen elektrischen Sensor des elektrischen Kanals ausgesteuerten elektrischen Signale vom Grad der Betätigung des Bremswertgebers dargestellt ist.

Der Erfindung liegt demgegenüber die Aufgabe zugrunde, ein Verfahren und eine Bremseinrichtung zur zuverlässigen Bestimmung des Bremsdruckwerts in einem Bremskreis eines Fahrzeugs hinsichtlich einer Verbesserung der Regelgenauigkeit des Systems anzugeben.

Diese Aufgabe wird erfindungsgemäß durch ein Verfahren gemäß Anspruch 1 und eine Bremseinrichtung gemäß Anspruch 9 gelöst.

### Offenbarung der Erfindung

Der Erfindung liegt ein Verfahren zugrunde, bei dem
a) eine erste Kennlinie ermittelt und gespeichert wird, in welcher die Abhängigkeit der von dem wenigstens einen elektrischen Sensor des elektrischen Kanals ausgesteuerten elektrischen Signale vom Grad der Betätigung des Bremswertgebers dargestellt ist, und
b) eine zweite Kennlinie ermittelt und gespeichert wird, in welcher die Abhängigkeit der von dem wenigstens einen pneumatischen Kanal ausgesteuerten Bremsdruckwerte von den durch den elektrischen Sensor erfassten elektrischen Signale dargestellt ist, wobei
c) der einer bestimmten Bremsanforderung durch Betätigung des Bremswertgebers entsprechende Bremsdruckwert anhand der ersten und zweiten Kennlinie ermittelt wird.

Die Erfindung betrifft auch eine Bremseinrichtung eines Fahrzeugs mit einem Bremswertgeber, beinhaltend wenigstens einen elektrischen Kanal mit wenigstens einem elektrischen Sensor und wenigstens einen pneumatischen Kanal, wobei die Bremseinrichtung ausgebildet ist, um einen Bremsdruckwert nach dem Verfahren nach einem der Ansprüche 1 bis 7 zu ermitteln und zu verwenden. Die Bremseinrichtung ist insbesondere ein elektronisch geregeltes Bremssystem (EBS) mit 1-Kanal oder 2-Kanal Druckregelmoduln. Dann kann auch bei einem Ausfall des in einem Druckregelmodul des EBS integrierten Drucksensors der ABS-Vordruck für das oder die dem Druckregelmoduln nachgeordnete(n) ABS-Steuerventil(e) ermittelt werden.

Mit anderen Worten wird die Funktion eines Vordruck-Sensors durch eine bereits in der Bremseinrichtung vorhandene Größe wie das vom Betätigungsgrad des Bremswertgebers abhängige elektrische Signal des elektrischen Kanals nachgebildet, indem der einer bestimmten Betätigung des Bremswertgebers entsprechende Bremsdruckwert anhand einer Kalibrierung des Bremswertgebers ermittelt wird. Daher wird der Bremswertgeber mit Hilfe des Verfahrens hinsichtlich seiner elektrischen und pneumatischen Ausgangssignale kalibriert, wobei diese Kalibrierung vorab beim Hersteller des Bremswertgebers beispielsweise durch Kennfelder vorgenommen werden kann, in denen die erste und zweite Kennlinie abgebildet ist.

Vorteilhaft kann dann in der Bremseinrichtung der Vordruck-Sensor entfallen, was besonders kostengünstig ist. Auch hat ein Ausfall eines in einer Bremseinrichtung vorhandenen Vordruck-Sensors keine negativen Auswirkungen auf die Bremseinrichtung, insbesondere nicht auf deren ABS-Regelung, weil der ABS-Vordruckwert anhand der beiden Kennlinien parallel ermittelt wird. Insbesondere ermöglicht die Erfindung bei einer elektronischen Bremsdruckregelung (EBS) auch bei gestörten oder abgeschalteten Druckregelmoduln weiterhin eine ABS-Regelung mit Hilfe der den Druckregelmoduln nachgeschalteten ABS-Ventile. Daher kann das erfindungsgemäße Verfahren bzw. eine Bremseinrichtung, in welcher ein nach diesem Verfahren ermittelter Bremsdruckwert verwendet wird, auch parallel zu einem vorhandenen bzw. funktionsfähigen Drucksensor als Redundanz zur Ermittlung von Bremsdruckwerten verwendet werden, welche der pneumatische Kanal des Bremswertgebers betätigungsabhängig aussteuert.

Durch die in den Unteransprüchen aufgeführten Maßnahmen sind vorteilhafte Weiterbildungen und Verbesserungen der in Anspruch 1 angegebenen Erfindung möglich.

Gemäß einer besonders zu bevorzugenden Ausführungsform des Verfahrens wird die zweite Kennlinie auch in Abhängigkeit des jeweils vorliegenden Vorratsdrucks ermittelt, aus welchem der Bremsdruck im Bremswertgeber abgeleitet wird. Denn der Bremswertgeber, hier beispielsweise ein elektronisches Fußbremsmodul wird in der Regel von einem Vorratsdruck eines Druckreservoirs mit pneumatischem Vorratsdruck versorgt, aus welchem dann betätigungsabhängig der pneumatische Bremsdruck bzw. Steuerdruck im pneumatischen Kanal des dort wie ein Betriebsbremsventil wirkenden Bremswertgebers abgeleitet wird. Dabei spielt die Höhe des jeweils vorliegenden Vorratsdrucks bei der Bildung des Bremsdrucks bzw. Steuerdrucks eine Rolle. Beispielsweise wird der Wert für den jeweils vorliegenden Vorratsdruck aus einem in einem Fahrzeug-Datenbus geführten Signal ausgelesen, welcher von einem Vorratsdruck-Sensor in den Fahrzeug-Datenbus eingesteuert wird.

Gemäß einer Weiterbildung des erfindungsgemäßen Verfahrens wird die erste Kennlinie und/oder die zweite Kennlinie auch in Abhängigkeit von alterungs- und/oder verschleißbedingten Parametern wie der Anzahl der bereits erfolgten Betätigungen des Fußbremsmoduls ermittelt bzw. angepasst. In die Kennlinien können dann alterungsbedingte Faktoren insbesondere statistisch eingehen. Dadurch wird der Tatsache Rechnung getragen, dass sich die erste und zweite Kennlinie alterungsbedingt ändern können.

Wie bereits oben erwähnt, wird dann der anhand der Kennlinien ermittelte Bremsdruckwert für eine Regelung, insbesondere für eine ABS-Regelung einer Bremseinrichtung herangezogen, als ABS-Vordruckwert, d.h. als ein Druckwert, wie er am Eingang des betreffenden ABS-Steuerventils ansteht.

Besonders bevorzugt wird der für einen Bremskreis ermittelte eine Bremsdruckwert zur Bestimmung eines anderen Bremsdruckwerts in einem weiteren Bremskreis herangezogen, wobei der andere Bremsdruckwert aus dem einen Bremsdruckwert durch eine funktionale Abhängigkeit ermittelt wird. Diese funktionale Abhängigkeit kann insbesondere in einem Faktor bestehen, durch welchen sich die beiden Bremsdruckwerte unterscheiden. Dabei kann der eine Bremskreis beispielsweise ein Vorderachsbremskreis und der andere Bremskreis ein Hinterachsbremskreis sein oder es liegen diagonale Bremskreise vor. Diese funktionale Abhängigkeit kann wiederum anhand einer Bremskreis-Kennlinie gespeichert und durch Versuche ermittelt worden sein.

Gemäß einer besonders zu bevorzugenden Ausführungsform der Bremseinrichtung sind die erste Kennlinie und/oder die zweite Kennlinie und/oder die Bremskreis-Kennlinie in einem Speicher eines Steuergeräts gespeichert. Dabei kann das Steuergerät in den Bremswertgeber integriert sein und/oder es wird durch ein Bremssteuergerät der Bremseinrichtung gebildet.

Besonders bevorzugt wird der Bremswertgeber durch ein kombiniertes elektrisches und pneumatisches Fußbremsmodul gebildet.

Weitere die Erfindung verbessernde Maßnahmen werden nachstehend gemeinsam mit der Beschreibung von Ausführungsbeispielen der Erfindung anhand der Zeichnung näher dargestellt.

### Zeichnung

In der Zeichnung zeigt
- Fig.1: einen schematischen Schaltplan einer Bremseinrichtung des Stands der Technik, bei welcher ein Drucksensor zur Bestimmung des Vordrucks in einer ABS-Regelung verwendet wird;
- Fig.2: einen schematischen Schaltplan einer bevorzugten Ausführungsform einer Bremseinrichtung, bei welcher der Vordruck für die ABS-Regelung ohne Drucksensor, aber nach dem Verfahren gemäß der Erfindung bestimmt wird;
- Fig.3: eine erste Kennlinie, wie sie im erfindungsgemäßen Verfahren verwendet wird;
- Fig.4: eine zweite Kennlinie, wie sie im erfindungsgemäßen Verfahren verwendet wird.

### Beschreibung des Ausführungsbeispiels

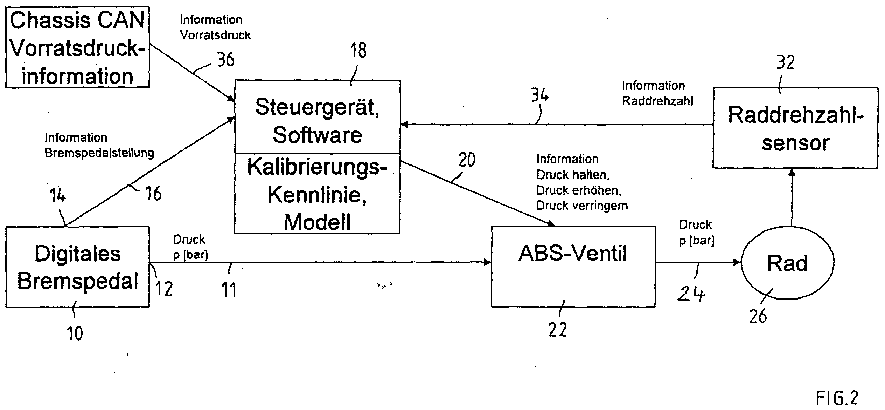

Ein Teil einer vorzugsweise elektro-pneumatischen Bremsanlage eines Nutzfahrzeugs ist in Fig.2 dargestellt und weist einen elektro-pneumatischen Bremswertgeber 10, etwa ein elektronisches Fußbremsmodul mit wenigstens einem pneumatischen Kanal 12 auf, über den ein pneumatischer Bremskreis der Bremseinrichtung mit Bremsdruckwerten beaufschlagbar ist, die abhängig vom Betätigungsgrad einer Fußbremspedal des Fußbremsmoduls 10 gebildet werden. Hierzu beinhaltet der pneumatische Kanal 12 des Fußbremsmoduls 10 beispielsweise ein hier nicht explizit gezeigtes Betriebsbremsventil, welches pneumatische Steuerdrücke bzw. Bremsdrücke abhängig von der Betätigung eines Fußbremspedals des Fußbremsmoduls 10 erzeugt und in eine pneumatische Leitung 11 einsteuert, welche den pneumatischen Kanal 12 mit einem ABS-Steuerventil 22 verbindet.

Weiterhin weist das Fußbremsmodul 10 wenigstens einen elektrischen Kanal 14 auf, über den ein elektrischer Bremskreis mit einem elektrischen Steuersignal beaufschlagbar ist, welches den der jeweiligen Bremsanforderung bzw. der jeweiligen Betätigung der Fußbremspedal entsprechenden Bremsdruckwert repräsentiert und welches beispielsweise mittels eines elektrischen Potentiometers erzeugt wird, das abhängig von einem Betätigungswinkel ϕ des Fußbremspedals einen bestimmten Strom I aussteuert. In dem elektrischen Kanal 14 des Fußbremsmoduls werden daher Bremsdrücke des pneumatischen Kanals 12 repräsentierende elektrische Steuersignale entsprechend der Betätigung des Fußbremspedals erzeugt. In das Fußbremsmodul kann auch ein noch später erläutertes elektronisches Bremssteuergerät 18 integriert sein. Ein solches Fußbremsmodul 10 ist hinlänglich bekannt, beispielsweise aus der eingangs erwähnten DE 198 52 399 A1.

Die vom elektrischen Kanal 14 erzeugten elektrischen Steuersignale werden über eine Signalleitung 16 dem elektronischen Bremssteuergerät 18 zur Auswertung zugeführt und dann als Steuersignale in eine hier nicht gezeigte elektro-pneumatische Steuerventileinrichtung wie einem Druckregelmodul eingesteuert, um einen bestimmten Bremsdruck in Bremsaktuatoren bzw. Bremszylindern der Bremseinrichtung zu erzeugen. Die Bremseinrichtung kann insbesondere eine elektronisch geregelte Bremseinrichtung mit Bremsdruckregelung sein. Bei einem Ausfall des elektrischen Bremskreises kann dann mit Hilfe des pneumatischen Bremskreises immer noch ein Bremsdruck erzeugt werden.

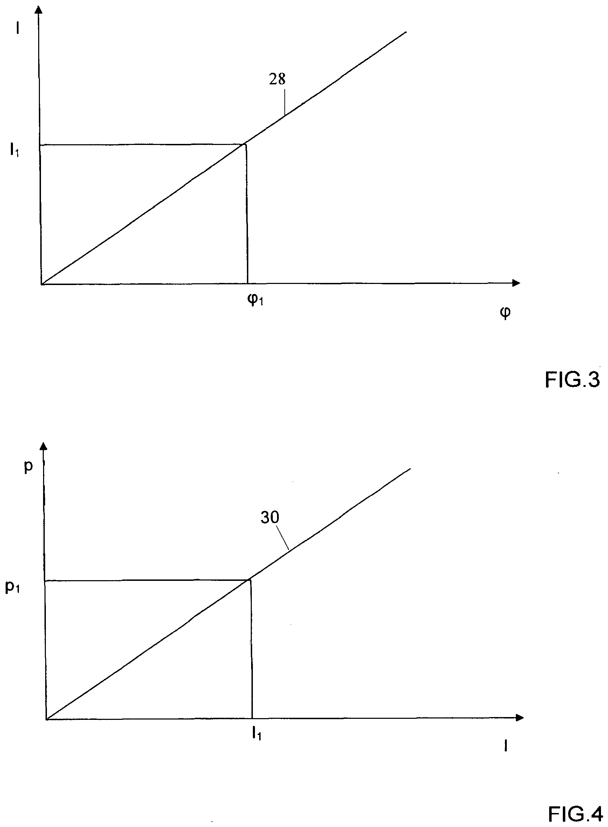

In dem elektronischen Bremssteuergerät 18 ist eine ABS-Regelungslogik implementiert, welche über eine weitere Signalleitung 20 ein ABS-Steuerventil 22 ansteuert, damit dieses gegebenenfalls durch Druckhalten, Drucksteigern bzw. Drucksenken aus dem im pneumatischen Kanal 12 anstehenden Steuerdruck bzw. Bremsdruck einen hinsichtlich eines optimalen Bremsschlupfes adaptierten Bremsdruck moduliert. Dieser Bremsdruck wird dann stromabwärts des ABS-Steuerventils 22 über eine pneumatische Leitung 24 in einen Radbremszylinder 26 eingesteuert. Ein Raddrehzahlsensor 32 misst die Raddrehzahl und übermittelt diese über eine Signalleitung 34 dem Bremssteuergerät 18, welches diese in bekannter Weise in Beziehung zu einer Fahrzeuggeschwindigkeit setzt, um den Ist-Bremsschlupf des betreffenden Rades festzustellen. Weicht der Ist-Bremsschlupf von einem optimalen Soll-Bremsschlupfbereich ab, so wird das ABS-Steuerventil angesteuert, um den Ist-Bremsschlupf anzupassen. Für die ABS-Regelung ist die Kenntnis des im pneumatischen Kanal 12 anstehenden und der jeweiligen Bremsanforderung gemäßen Bremsdruckwerts dienlich. Zur Ermittlung dieses Bremsdruckwerts wird ein Verfahren vorgeschlagen, bei dem
- eine erste Kennlinie 28 gemäß Fig.3 ermittelt und gespeichert wird, in welcher die Abhängigkeit der von dem elektrischen Kanal 14 ausgesteuerten elektrischen Signale vom Grad der Betätigung des Fußbremsmoduls 10 dargestellt ist, und
- eine zweite Kennlinie 30 ermittelt und gespeichert wird, in welcher die Abhängigkeit der von dem pneumatischen Kanal 12 ausgesteuerten Bremsdruckwerte von den elektrischen Signalen des elektrischen Kanals 14 dargestellt ist, wobei
- der der Bremsanforderung durch Betätigung des Fußbremsmoduls 10 entsprechende Bremsdruckwert anhand der ersten Kennlinie 28 und zweiten Kennlinie 30 ermittelt wird.

Dann kann auf den Drucksensor 5 des Stands der Technik gemäß Fig1. verzichtet werden. Im Einzelnen werden daher beispielsweise durch Versuche die erste Kennlinie 28 gemäß Fig.3 sowie die zweite Kennlinie 30 gemäß Fig.4 geschaffen. Die zweite Kennlinie 30 gemäß Fig.4 wird besonders bevorzugt auch in Abhängigkeit des jeweils am Eingangsanschluss für den pneumatischen Kanal 12 des Fußbremsmoduls 10 vorliegenden Vorratsdrucks ermittelt.

Besonders bevorzugt sind die erste Kennlinie 28 und/oder die zweite Kennlinie 30 und/oder die Bremskreis-Kennlinie in einem Speicher des Bremssteuergeräts 18 der Bremseinrichtung gespeichert.

Beispielsweise wird bei einem Betätigungswinkel ϕ₁ des Fußbremspedals des Fußbremsmoduls 10 ein Strom I₁ als elektrisches Steuersignal im elektrischen Kanal 14 erzeugt, wie die erste Kennlinie 28 in Fig.3 zeigt. Dieses Steuersignal I₁ entspricht dann gemäß der in Fig.4 dargestellten zweiten Kennlinie 30 einem Bremsdruckwert p₁ bei einem bestimmten Vorratsdruck. Dieser Bremsdruckwert p₁ wird dann als Vordruckwert für das ABS-Steuerventil 22 in der ABS-Regelung der Bremseinrichtung herangezogen.

Da dieser Bremsdruckwert p₁ nicht nur vom Betätigungsgrad bzw. Betätigungswinkel ϕ₁ des Fußbremspedals des Fußbremsmoduls sondern auch vom jeweils am pneumatischen Eingang des pneumatischen Kanals 12 des Fußbremsmoduls abhängen kann, hängt der Verlauf der zweiten Kennlinie 30 gemäß Fig.4 auch vom jeweiligen Wert des Vorratsdrucks ab. Folglich kann Fig.4 für jeden Vorratsdruckwert eine eigene Kennlinie 30 enthalten. Der jeweilige Wert des Vorratsdrucks kann aus einem in einem Fahrzeug-Datenbus (CAN) 36 geführten Signal entnommen werden, welches beispielsweise von einem Vorratsdruck-Sensor in den Fahrzeug-Datenbus eingesteuert wird.

Gemäß einer Weiterbildung des erfindungsgemäßen Verfahrens wird die erste Kennlinie 28 gemäß Fig.3 und/oder die zweite Kennlinie 30 gemäß Fig.4 auch in Abhängigkeit von alterungs- und/oder verschleißbedingten Parametern wie der Anzahl der bereits erfolgten Betätigungen des Fußbremsmoduls 10 ermittelt bzw. angepasst. Dadurch wird der Tatsache Rechnung getragen, dass sich die erste und/oder zweite Kennlinie 28, 30 bedingt durch Verschleiß und Alterung des Fußbremsmoduls 10 ändern kann.

In Fig.2 ist die Bremseinrichtung mit nur einem pneumatischen Kanal 12 bzw. Bremskreis und einem elektrischen Kanal bzw. Bremskreis 14 dargestellt. Es können aber auch jeweils mehrere Bremskreise vorhanden sein. Besonders bevorzugt wird dann der für einen pneumatischen Bremskreis mit Hilfe des oben vorgestellten Verfahrens ermittelte Bremsdruckwert zur Bestimmung eines anderen Bremsdruckwerts in einem weiteren pneumatischen Bremskreis herangezogen werden, wobei der andere Bremsdruckwert aus dem einen Bremsdruckwert durch eine funktionale Abhängigkeit ermittelt wird. Diese funktionale Abhängigkeit kann insbesondere in einem Faktor bestehen, durch welchen sich die beiden Bremsdruckwerte unterscheiden. Diese funktionale Abhängigkeit kann beispielsweise in einem weiteren Kennfeld bzw. einer Bremskreis-Kennlinie gespeichert sein. Dabei kann der eine Bremskreis beispielsweise ein Vorderachsbremskreis und der andere Bremskreis ein Hinterachsbremskreis sein oder es liegen diagonale Bremskreise vor.

### Bezugszeichenliste

- 1: Raddrehzahlsensor
- 2: Steuergerät
- 4: Radbremszylinder
- 5: Vordruck-Sensor
- 6: Bremswertgeber
- 8: ABS-Steuerventil
- 10: Bremswertgeber
- 11: pneumatische Leitung
- 12: pneumatischer Kanal
- 14: elektrischer Kanal
- 16: Signalleitung
- 18: Bremssteuergerät
- 20: Signalleitung
- 22: ABS-Steuerventil
- 24: pneumatische Leitung
- 26: Radbremszylinder
- 28: erste Kennlinie
- 30: zweite Kennlinie
- 32: Raddrehzahlsensor
- 34: Signalleitung
- 36: Fahrzeug-Datenbus

## Patentansprüche

1. Verfahren zur Bestimmung des Bremsdruckwerts des von einem pneumatischen Kanal (12) eines weiterhin wenigstens einen elektrischen Kanal (14) aufweisenden Bremswertgebers (10) ausgesteuerten Bremsdrucks in einer Bremseinrichtung eines Kraftfahrzeugs ohne Verwendung eines Bremsdrucksensors,
wobei durch wenigstens einen, dem elektrischen Kanal (14) zugeordneten elektrischen Sensor abhängig von Betätigungen des Bremswertgebers (10) gewünschte Bremsdruckwerte repräsentierende elektrische Signale erzeugt werden, bei dem
a) eine erste Kennlinie (28) ermittelt und gespeichert wird, in welcher die Abhängigkeit der von dem wenigstens einen elektrischen Sensor des elektrischen Kanals (14) ausgesteuerten elektrischen Signale vom Grad der Betätigung des Bremswertgebers (10) dargestellt ist, und
b) eine zweite Kennlinie (30) ermittelt und gespeichert wird, in welcher die Abhängigkeit der von dem wenigstens einen pneumatischen Kanal (12) ausgesteuerten Bremsdruckwerte von den durch den elektrischen Sensor erfassten elektrischen Signale dargestellt ist, wobei
c) der einer bestimmten Bremsanforderung durch Betätigung des Bremswertgebers (10) entsprechende Bremsdruckwert anhand der ersten Kennlinie (28) und der zweiten Kennlinie (30) ermittelt wird.

2. Verfahren nach Anspruch 1, **dadurch gekennzeichnet, dass** die zweite Kennlinie (30) auch in Abhängigkeit des jeweils vorliegenden Vorratsdrucks ermittelt wird, aus welchem der Bremsdruck im pneumatischen Kanal (12) des Bremswertgebers (10) abgeleitet wird.

3. Verfahren nach Anspruch 2, **dadurch gekennzeichnet, dass** der Wert für den jeweils vorliegenden Vorratsdruck aus einem in einem Fahrzeug-Datenbus geführten Signal entnommen wird, welches von einem Vorratsdruck-Sensor in den Fahrzeug-Datenbus (36) eingesteuert wird.

4. Verfahren nach einem der vorhergehenden Ansprüche, **dadurch gekennzeichnet, dass** die erste Kennlinie (28) und/oder die zweite Kennlinie (30) auch in Abhängigkeit von alterungs- und/oder verschleißbedingten Parametern wie der Anzahl der bereits erfolgten Betätigungen des Bremswertgebers (10) ermittelt bzw. angepasst werden.

5. Verfahren nach einem der vorhergehenden Ansprüche, **gekennzeichnet durch** Heranziehen der ermittelten Bremsdruckwerte für eine Regelung.

6. Verfahren nach Anspruch 5, **dadurch gekennzeichnet, dass** die ermittelten Bremsdruckwerte für eine ABS-Regelung einer Bremseinrichtung herangezogen werden, bei welcher der ermittelte Bremsdruckwert einen ABS-Vordruckwert bildet.

7. Verfahren nach einem der vorhergehenden Ansprüche, **dadurch gekennzeichnet, dass** ein für einen pneumatischen Bremskreis der Bremseinrichtung ermittelte Bremsdruckwert zur Bestimmung eines anderen Bremsdruckwerts in einem weiteren pneumatischen Bremskreis herangezogen wird, wobei der andere Bremsdruckwert aus dem einen Bremsdruckwert durch eine funktionale Abhängigkeit ermittelt wird.

8. Computerprogrammprodukt, **dadurch gekennzeichnet, dass** es einen Algorithmus enthält, durch welchen das Verfahren nach einem der Ansprüche 1 bis 7 ausführbar ist.

9. Bremseinrichtung eines Fahrzeugs mit einem Bremswertgeber (10), beinhaltend wenigstens einen wenigstens einen elektrischen Sensor aufweisenden elektrischen Kanal (14) und wenigstens einen pneumatischen Kanal (12), wobei die Bremseinrichtung ausgebildet ist, um einen Bremsdruckwert nach dem Verfahren nach einem der Ansprüche 1 bis 7 zu ermitteln und zu verwenden.

10. Bremseinrichtung nach Anspruch 9, **dadurch gekennzeichnet, dass** sie eine Regelung mit einem Ist-Bremsdruck als Eingangsgröße umfasst, bei welcher der Ist-Bremsdruck der ermittelte Bremsdruckwert ist.

11. Bremseinrichtung nach Anspruch 10, **dadurch gekennzeichnet, dass** die Regelung durch eine ABS-Regelung gebildet wird, bei welcher der ermittelte Bremsdruckwert den ABS-Vordruckwert bildet.

12. Bremseinrichtung nach einem der Ansprüche 9 bis 11, **dadurch gekennzeichnet, dass** die erste Kennlinie (28) und die zweite Kennlinie (30) in einem Speicher eines Steuergeräts (18) gespeichert ist.

13. Bremseinrichtung nach Anspruch 12, **dadurch gekennzeichnet, dass** das Steuergerät (18) in den Bremswertgeber integriert ist und/oder durch ein Bremssteuergerät gebildet wird.

14. Bremseinrichtung nach Anspruch 13, **dadurch gekennzeichnet, dass** der Bremswertgeber (10) durch ein kombiniertes elektro-pneumatisches Fußbremsmodul gebildet wird.

## Claims

1. Method for determining the brake pressure value of the brake pressure which is modulated by a pneumatic channel (12) of a braking value encoder (10) further having at least one electrical channel (14), in a braking device of a motor vehicle without using a brake pressure sensor,
wherein electrical signals which represent brake pressure values which are desired as a function of activations of the braking value encoder (10) are generated by at least one electrical sensor which is assigned to the electrical channel (14), in which
a) a first characteristic curve (28), in which the dependence of the electrical signals, modulated by the at least one electrical sensor of the electrical channel (14), on the degree of activation of the braking value encoder (10) is represented, is determined and stored, and
b) a second characteristic curve (30), in which the dependence of the brake pressure values, modulated by the at least one pneumatic channel (12), on the electrical signals detected by the electrical sensor is represented, is determined and stored, wherein
c) the brake pressure value which corresponds to a specific braking request as a result of activation of the braking value encoder (10) is determined on the basis of the first characteristic curve (28) and the second characteristic curve (30).

2. Method according to Claim 1, **characterized in that** the second characteristic curve (30) is also determined as a function of the respectively present supply pressure from which the brake pressure in the pneumatic channel (12) of the braking value encoder (10) is derived.

3. Method according to Claim 2, **characterized in that** the value of the respectively present supply pressure is extracted from a signal which is conducted in a vehicle databus and is applied to the vehicle databus (36) by a supply pressure sensor.

4. Method according to one of the preceding claims, **characterized in that** the first characteristic curve (28) and/or the second characteristic curve (30) are also determined or adapted as a function of aging-induced and/or wear-induced parameters such as the number of activations of the braking value encoder (10) which have already taken place.

5. Method according to one of the preceding claims, **characterized by** using the determined brake pressure values for a closed-loop control means.

6. Method according to Claim 5, **characterized in that** the determined brake pressure values are used for an ABS closed-loop control means of a braking device, in which the determined brake pressure value forms an ABS admission pressure value.

7. Method according to one of the preceding claims, **characterized in that** a brake pressure value, determined for a pneumatic brake circuit of the braking device, is used to determine another brake pressure value in a further pneumatic brake circuit, wherein the other brake pressure value is determined from the one brake pressure value by means of a functional dependence.

8. Computer program product, **characterized in that** said computer program product contains an algorithm by which the method according to one of Claims 1 to 7 can be implemented.

9. Braking device of a vehicle having a braking value encoder (10), containing at least one electrical channel (14) which has at least one electrical sensor, and at least one pneumatic channel (12), wherein the braking device is configured to determine a brake pressure value according to the method according to one of Claims 1 to 7, and to use said brake pressure value.

10. Braking device according to Claim 9, **characterized in that** said braking device comprises a closed-loop control means having an actual brake pressure as an input variable, in which closed-loop control means the actual brake pressure is the determined brake pressure value.

11. Braking device according to Claim 10, **characterized in that** the closed-loop control means is formed by an ABS closed-loop control means, in which the determined brake pressure value forms the ABS admission pressure value.

12. Braking device according to one of Claims 9 to 11, **characterized in that** the first characteristic curve (28) and the second characteristic curve (30) are stored in a memory of a control unit (18).

13. Braking device according to Claim 12, **characterized in that** the control unit (18) is integrated into the braking value encoder and/or is formed by a brake control unit.

14. Braking device according to Claim 13, **characterized in that** the braking value encoder (10) is formed by a combined electro-pneumatic foot-operated brake module.

## Revendications

1. Procédé de détermination de la valeur de la pression de freinage commandée par un canal pneumatique (12) d'un transducteur (10) de valeur de freinage ayant en outre au moins un canal (14) électrique dans un dispositif de freinage d'un véhicule automobile sans utilisation d'un capteur de la pression de freinage,
dans lequel, on produit, par au moins un capteur électrique associé au canal (14) électrique, des signaux électriques représentant des valeurs de pression de freinage souhaitées, en fonction d'actionnements du transducteur (10) de valeur de freinage, dans lequel
a) on détermine et on met en mémoire une courbe (28) caractéristique, dans laquelle la variation des signaux électriques commandés par au moins un capteur (14) électrique du canal électrique en fonction du degré et de l'actionnement du transducteur (10) de valeur de freinage est représentée, et
b) on détermine et on met en mémoire une deuxième courbe (30) caractéristique, dans laquelle la variation des valeurs de pression de freinage commandées par le au moins un canal (12) pneumatique en fonction des signaux électriques détectés par le capteur électrique est représentée, dans lequel
c) on détermine, à l'aide de la première courbe (28) caractéristique et de la deuxième courbe (30) caractéristique, la valeur de pression de freinage correspondant à une demande de freinage déterminée par actionnement du transducteur (10) de valeur de freinage.

2. Procédé selon la revendication 1, **caractérisé en ce que** la deuxième courbe caractéristique (30) est aussi déterminée en fonction de la pression de réserve respectivement présente, de laquelle la pression de freinage est dérivée dans le canal pneumatique (12) du transducteur de valeur de freinage (10).

3. Procédé selon la revendication 2, **caractérisé en ce que** la valeur de la pression de réserve respectivement présente est prélevée d'un signal passant dans un bus de données du véhicule, qui est commandée par un détecteur de pression de réserve dans le bus de données du véhicule (36).

4. Procédé selon l'une quelconque des revendications précédentes, **caractérisé en ce que** la première courbe caractéristique (28) et/ou la deuxième courbe caractéristique (30) sont déterminées ou respectivement adaptées aussi en fonction des paramètres, qui sont liés au vieillissement et/ou à l'usure, comme le nombre des actionnements du transducteur de valeur de freinage (10) réalisées déjà.

5. Procédé selon l'une quelconque des revendications précédentes, **caractérisé par** l'emploi des valeurs de pression de freinage déterminées pour une opération de régulation.

6. Procédé selon la revendication 5, **caractérisé en ce que** les valeurs de pression de freinage déterminées sont employées pour une régulation ABS d'un système de freinage, dans lequel la valeur de pression de freinage déterminée constitue une valeur de pression pilote ABS.

7. Procédé selon une quelconque des revendications précédentes, **caractérisé en ce qu'**une valeur de pression de freinage, qui est déterminée pour un circuit de freinage pneumatique du système de freinage, est employée pour la détermination d'une autre valeur de pression de freinage dans un autre circuit de freinage pneumatique, l'autre valeur de pression de freinage étant dérivée de la valeur de pression de freinage par une dépendance fonctionnelle.

8. Produit de programme pour un ordinateur, **caractérisé en ce qu'**il comprend un algorithme, par lequel le procédé selon l'une quelconque des revendications 1 à 7 est réalisable.

9. Système de freinage d'un véhicule muni d'un transducteur de valeur de freinage (10), comprenant au moins un canal électrique (14), ayant au moins un détecteur électrique, et au moins un canal pneumatique (12), dans lequel le système de freinage est constitué pour utiliser une valeur de pression de freinage à déterminer par le procédé selon l'une des revendications 1 à 7.

10. Système de freinage selon la revendication 9, **caractérisé en ce qu'**il comprend une régulation utilisant une pression de freinage réelle en tant que grandeur d'entrée, dans lequel la pression de freinage réelle est la valeur de pression de freinage.

11. Système de freinage selon la revendication 10, **caractérisé en ce que** la régulation est formée d'une régulation ABS, dans laquelle la valeur de pression de freinage déterminée forme la valeur de pression pilote ABS.

12. Système de freinage selon l'une quelconque des revendications 9 à 11, **caractérisé en ce que** la première courbe caractéristique (28) et la deuxième courbe caractéristique (30) sont mémorisées dans une mémoire d'un dispositif de commande (18).

13. Système de freinage selon la revendication 12, **caractérisé en ce que** le dispositif de commande (18) est intégré dans le transducteur de valeur de freinage et/ou est formé par un dispositif de commande de freinage.

14. Système de freinage selon la revendication 13, **caractérisé en ce que** le transducteur de puissance de freinage (10) est formé d'un module électro-pneumatique combiné de frein à pied.
